Europäisches Patentamt

European Patent Office

Office européen des brevets

(11) Publication number: **0 059 592**
**B1**

## (12) EUROPEAN PATENT SPECIFICATION

(45) Date of publication of patent specification: **28.08.85**

(21) Application number: **82300925.3**

(22) Date of filing: **23.02.82**

(51) Int. Cl.⁴: **C 22 B 60/02**

(54) Process for recovering uranium.

| | |
|---|---|
| (30) Priority: **26.02.81 US 238555**<br>**27.05.81 US 267672** | (73) Proprietor: **PRODECO, INC.**<br>**P.O. Box 765**<br>**Mulberry Florida 33860 (US)** |
| (43) Date of publication of application:<br>**08.09.82 Bulletin 82/36** | (72) Inventor: **Worthington, Ralph Eric**<br>**579, Alachua Drive**<br>**Winter Haven Florida 33880 (US)**<br>Inventor: **Magdics, Alex**<br>**504, Laurel Hill**<br>**Lakeland Florida 33803 (US)** |
| (45) Publication of the grant of the patent:<br>**28.08.85 Bulletin 85/35** | |
| (84) Designated Contracting States:<br>**BE DE FR GB IT NL SE** | (74) Representative: **Whalley, Kevin et al**<br>**Marks & Clerk 57/60 Lincoln's Inn Fields**<br>**London WC2A 3LS (GB)** |
| (56) References cited:<br>**FR-A-2 423 545**<br>**FR-A-2 435 444**<br>**US-A-2 859 094**<br>**US-A-2 866 680**<br>**US-A-2 947 774** | |

Courier Press, Leamington Spa, England.

## Description

The invention relates to a process for recovering uranium using an alkyl pyrophosphoric acid and alkaline stripping solution.

Minable phosphate is found in a number of places throughout the world, and in many of these deposits small quantities of uranium are found complexed with the phosphate values. The large phosphate deposit in central Florida, for example, contains from 0.01 to 0.02 weight percent uranium. This uranium is taken into solution when the phosphate is acidulated with mineral acid to produce wet-process phosphoric acid.

Alkyl pyrophosphoric acid is very efficient in selectively extracting uranium from phosphoric acid, and several flow sheets utilizing this type of extractant are shown in U.S. Patent No. 2 866 680. Prior processes for recovering uranium using a pyrophosphoric acid extractant include processes in which uranium is stripped from the extractant into an acidic stripping solution. It is also known to strip uranium from the extractant into an alkaline stripping solution as disclosed in French Patent No. 2 423 545 which relates to a process of recovering uranium contained in a phosphated solution, which comprises the following steps:

(a) contacting the aqueous solution containing uranium and phosphate with an organic phase containing a diester of pyrophosphoric acid;

(b) contacting with an alkaline solution the organic phase containing uranium obtained in step (a);

(c) adding to said alkaline solution a uranium precipitation agent;

(d) acidifying the product resulting from step (c);

(e) agitation, then separation of the organic phase from the aqueous phase; and

(f) recycling of said organic phase to step (a); an operation of solid-liquid separation being also carried out between said step (c) of addition of a uranium precipitation agent and said step (f) of recycling.

In this process, part of the pyrophosphoric acid esters is stripped into the alkaline stripping solution and is subsequently redissolved in the diluent of the organic extractant solution. A modifier such as a long chain alcohol is added to the extractant for the purpose of retarding hydrolysis of the pyrophosphoric acid esters.

The present invention aims to provide an improved process for recovering uranium, from wet-process phosphoric acid, using an alkyl pyrophosphoric acid extractant and an alkaline stripping solution which is economical and minimizes consumption of costly reagents.

The present invention provides a process for stripping uranium from a pregnant organic extractant comprising an alkyl pyrophosphoric acid dissolved in a substantially water-immiscible organic diluent, the said organic extractant containing tetravalent uranium and an alcohol or phenol modifier in a quantity sufficient to retain the alkyl pyrophosphoric acid in solution in the said diluent during stripping, comprising adding an oxidizing agent to the organic extractant to oxidize the tetravalent uranium, and stripping the organic extractant with a stripping solution comprising an aqueous solution of an alkali metal or ammonium carbonate or hydroxide to strip uranium from the organic extractant into the stripping solution, and separating the organic extractant containing the alkyl pyrophosphoric acid dissolved in the diluent from the stripping solution containing the said stripped uranium.

In accordance with a preferred manner of carrying out the present invention, uranium is stripped from an organic extractant containing an alkyl pyrophosphoric acid such as isodecyl pyrophosphoric acid as the extractant agent into an alkaline stripping solution. The pyrophosphoric acid ester in the organic extractant is dissolved in a suitable essentially water-immiscible organic diluent such as kerosene. The organic extractant contains tetravalent uranium extracted from wet-process phosphoric acid. The organic extractant also contains an alcohol or phenol modifier added to the organic extractant in a quantity sufficient to retain the pyrophosphoric acid esters in a solution in the diluent during stripping. The maximum quantity of modifier added to the organic extractant is about 1 mole of the modifier per phosphorus (P) atom contained in the organic extractant. This quantity of modifier corresponds to the theoretical quantity necessary for hydrogen bonding of each oxygen doubly bonded to a phosphorus atom.

The organic extractant is treated with an oxidizing agent such as hydrogen peroxide to oxidize the tetravalent uranium in the pregnant extractant. The extractant is then stripped with the alkaline stripping solution which comprises an aqueous solution of an alkali metal or ammonium carbonate or hyroxide as an aqueous solution of ammonium carbonate. During contact between the alkaline stripping solution and the pregnant organic extractant, uranium is stripped from the extractant into the stripping solution. Because of the presence of the modifier in the organic extractant, however, the pyrophosphoric acid esters remain dissolved in the diluent in the organic extractant.

The barren organic extractant is preferably washed to remove any stripping solution entrained in the extractant and then is recycled for contacting with fresh wet-process acid. Fresh pyrophosphoric acid ester is added to the recycled barren organic extractant. In this manner, the extraction coefficient of the extractant is maintained at a relatively high level.

Ferric iron is typically extracted into the organic extractant during contact with the wet-process phosphoric acid even when reduced acid is employed. A portion of this ferric iron is stripped into the alkaline stripping solution during contact between the organic and aqueous phases during stripping and is precipitated in the stripping solution. Also precipitated in the stripping solution are pyrophosphoric acid ester decomposition products from the extractant. After separating the ferric iron and pyrophosphoric acid precipitates, the uranium is recovered.

The invention will be further described, by way of example only, with reference to the accompanying drawings, in which:

Figure 1 is a schematic flow sheet illustrating the recovery of uranium from wet-process phosphoric acid in which the uranium is precipitated in the alkaline stripping solution; and

Figure 2 is a schematic flow sheet illustrating the recovery of uranium from wet-process phosphoric acid in which uranium does not precipitate during stripping.

Wet-process phosphoric acid is obtained by the acidulation of uncalcined phosphate rock with sulfuric acid and can contain about 20 to 55% $P_2O_5$ by weight, more typically about 25 to 50% $P_2O_5$. Wet-process acid normally contains about 28 to 32% $P_2O_5$ by weight, but can typically contain about 40 to 45% $P_2O_5$ if produced by the hemihydrate process. The wet-process acid is treated so that ferric iron in the acid is reduced to the ferrous state. Since the oxidation state of the iron tends to control the oxidation state of the uranium, substantially all of the uranium will be in the reduced tetravalent state even at relatively high ferric iron concentrations. However, to minimize ferric iron interference with extraction and stripping, the ferric iron should be reduced such that the ferric iron concentration is at least about 8 g/l or below, preferably at least about 6 g/l or below.

The manner in which the ferric iron is reduced is not critical. The ferric iron can be reduced using a chemical reductant such as iron metal, silicon metal, or an iron-silicon alloy commonly referred to in the art as a ferrosilicon alloy having a silicon content of preferably about 5 to 80% by weight, and most preferably about 5 to 20% by weight. The ferric iron also can be reduced using electrolytic reduction. In the reduction step, $Fe^{+3}$ is reduced to $Fe^{+2}$ and any $U^{+6}$ to $U^{+4}$. As indicated above, it is not necessary that all of the $Fe^{+3}$ be reduced to the lower valence state in order to effectively extract the uranium from wet-process acid. Thus, the extent to which the ferric iron concentration in the wet-process acid is reduced is a question of economics based on the overall uranium recovery process.

The reduced wet-process acid is cooled using any conventional technique such as cooling water or an evaporator. The temperature of the wet-process acid is typically about 60 to 80°C. It is preferred to cool the acid to about 55°C or below, more preferably about 30 to 50°C. Cooling the acid increases the extraction coefficient during extraction, decreases the rate of hydrolysis of the extractant, and improves the uranium recovery process. Again, however, the extent to which the acid is cooled, if any, is a question of economics based on the overall uranium recovery process.

The cooled wet-process acid is clarified to at least partially remove inorganic solids such as calcium sulfate (gypsum) and organic solids such as humics. There are several techniques known in the art for clarifying wet-process acid, and any of these techniques can be employed. For example, a rake tank classifier or Lamella clarifier can be employed to clarify the acid. The clarification step may employ a separate solids separation unit. Preferably, the clarified acid is then passed through a polishing filter to reduce the solids concentration to about 20 parts per million (ppm) or less.

The uranium in the clarified acid is extracted with an alkyl pyrophosphoric acid (APPA). The various APPA extractants that can be used include those disclosed in U.S. Patent No. 2,866,680. The APPA extractants are the reaction product of phosphoric oxide and an alcohol which typically has a chain length of from 4 to 20 carbon atoms, preferably from 6 to 12 carbon atoms. The reaction product is a complex mixture, as indicated by "Products of the Reaction Between Alcohols and Phosphorus Pentaoxide: Identity and Extraction Efficiency of the Various Products", M. Zangen, Y. Marcus and E. D. Bergmann, *Separation Science,* (2), pp. 187—197, 1967. Methods for preparing the APPA extractants are disclosed in U.S. Patents Nos. 2,866,680 and 2,947,774.

It is preferred to form APPA extractants using essentially the method disclosed in U.S. Patent No. 2,947,774.

The APPA extractant is dissolved in an essentially water-immiscible organic diluent. Suitable diluents include, for example, aliphatic hydrocarbons, petroleum fractions low in aromatics, and chlorinated hydrocarbons. The preferred diluents are refined high-boiling, high-flash point petroleum fractions containing between 10 and 50% by volume naphthenes with the balance being principally aliphatic.

The APPA concentration in the extractant solution is generally about 10 to 150 g/l, more generally about 10 to 100 g/l. The concentration of APPA in the extractant solution which is used in practice will be determined by various factors including the ferric iron concentration in the wet-process acid and the temperature to which the acid is cooled.

The extractant solution contains a modifier to retain the salts of APPA formed during stripping in solution in the diluent. The modifier is any essentially water-immiscible alcohol or phenol which is soluble in the diluent and contains an —OH group which will bond to the doubly bonded oxygen on the phosphate grouping of the pyrophosphoric acid by hydrogen bonding. The alcohol can be an aliphatic or substituted aliphatic or alicyclic alcohol containing 4 to 20, preferably 6 to 12, carbon atoms. Preferably, the same or a similar chain length alcohol is used as a modifier as is used to prepare the APPA (e.g., an octanol modifier is used when octanol is used to prepare octyl pyrophosphoric acid). The phenol can be a substituted or unsubstituted phenol. The preferred phenols are nonylphenol and octylphenol, both of which are commercially available.

The modifier is added to the organic extractant in a quantity sufficient to retain the APPA salts formed during stripping in solution in the diluent. Since the modifier depresses the extraction coefficient of the pyrophosphoric acid ester, the maximum quantity of modifier added to the organic extractant is controlled to maximize the solubility of the APPA salts in the diluent while avoiding the addition of modifier which would unnecessarily depress the extraction coefficient of the APPA extractant. The maximum quantity of modifier added to the organic extractant is about one mole of the modifier per phosphorus (P) atom contained in the organic extractant. This quantity of modifier corresponds to the theoretical quantity necessary for hydrogen bonding of each oxygen doubly bonded to a phosphorus atom.

The maximum quantity of modifier added to the organic extractant is defined in terms of the phosphorus atom concentration since the APPA extractant is a complex mixture which may contain a number of ingredients in addition to the diesters of pyrophosphoric acid. Referring specifically to the diesters of pyrophosphoric acid, the maximum quantity of modifier theoretically required for hydrogen bonding of each oxygen doubly bonded to a phosphorus atom is 2 moles of modifier per mole of diester since each mole of the diester contains two phosphorus atoms. Generally, the weight ratio of the modifier to the APPA required to retain the APPA salts formed during stripping in solution in the diluent and yet avoid any unnecessary depression of the extraction coefficient will be about 1/2 to 3/4, preferably about 1/2 to 2/3.

The extraction can be accomplished in a batch operation or in a continuous manner concurrently or counter-currently with countercurrent flow preferred. Apparatus for accomplishing intermixing and separation of two substantially immiscible phases are well known in the art, and any conventional apparatus can be used for this purpose. It is preferred to operate the extraction in the aqueous continuous mode using a 3 to 8 stage, preferably 5 to 8 stage, countercurrent uranium extraction unit. In general, the volume ratio of the wet-process acid to the extractant solution during extraction should be about 1 to 10:1.

After extraction, the wet-process acid is returned to the acid producer for additional processing to make "merchant acid", which is either sold or used to manufacture a variety of products, chiefly fertilizers. Preferably, any extractant entrained in the wet-process acid during extraction is removed from the wet-process acid before the acid is returned to the acid producer. The entrained extractant can be removed by any conventional technique including the use of one or more flotation cells.

The uranium in the APPA extractant is oxidized and the uranium converted from the tetravalent state to the hexavalent state in the extractant. The preferred oxidizing agent is hydrogen peroxide; however, other oxidizing agents such as sodium chlorate could be employed. The hydrogen peroxide is preferably added to the extractant as an about 25 to 50% by volume aqueous solution. The amount of oxidizing agent added should be in excess of the stoichiometric amount required to oxidize the uranium content of the extractant to the +6 state ($UO_2^{++}$).

In the next step of the process, the extractant is stripped of its uranium content by contacting the extractant with an alkaline stripping solution to strip uranium and precipitate any ferric iron and orthoesters derived from the extractant such as by hydrolysis of the pyrophosphoric acid ester. The alkaline stripping solution is an aqueous solution of an alkali metal or ammonium carbonate or hydroxide. The preferred stripping solution is an ammonium-ion containing solution such as an aqueous ammonium carbonate solution. The terminology "carbonate" also is intended to encompass bicarbonate.

In general, the pH of the alkaline stripping solution should be about 8 to 12, preferably about 9 to 10. For example, if an ammonium carbonate solution is used, it should be about 0.5 to 3M. The temperature in the stripping stage will normally be about 60°C but may be the same as the temperature to which the acid is cooled prior to extraction.

The APPA extractant is washed to remove any alkaline stripping solution entrained in the extractant. Preferably, this is accomplished in a separate washing step in which the extractant is washed with makeup for the alkaline stripping solution. For example, the extractant is washed with an aqueous ammonium carbonate solution.

The washed extractant is recycled for contact with fresh wet-process acid. Prior to contact with the acid, however, fresh APPA extractant, appropriately diluted with diluent, is combined with the barren extractant to make up for physical losses and to maintain the extraction coefficient at a relatively high level during the next extraction cycle. The APPA concentration of the fresh extractant is typically about 20 to 1000 g/l, preferably about 400 to 600 g/l. Modifier also is added to the recycled barren extractant as required to maintain the desired modifier concentration.

The recycled barren extractant stream may, if desired, be acidulated with mineral acid such as phosphoric acid prior to being recontacted with wet-process acid in extraction. The acidulation converts the APPA extractant from its salt form (e.g., ammonium form) to its acid form. Otherwise, the extractant will be acidified during the first stages of contact with wet-process acid.

In accordance with one embodiment of the invention, the alkaline solution is maintained saturated with uranium so that the uranium stripped into the stripping solution will precipitate in the stripping solution. In accordance with this embodiment, the alkaline stripping solution, after being separated from the extractant, is fed to a solids separator such as a conventional centrifuge or filter. The precipitate is separated from the alkaline stripping solution in the solids separator. The alkaline stripping solution is recycled for contact with pregnant APPA extractant.

The precipitate removed from the alkaline stripping solution must be treated prior to drying and calcination to separate any iron and orthoester solids from the uranium precipitate. Preferably, the solids separated from the alkaline stripping solution are mixed with an aqueous solution and heated to a sufficiently high temperature to dissolve substantially all of the uranium precipitate. The iron and orthoester solids are then removed in a second solids separator such as a conventional centrifuge or filter. The solution can then be cooled to reprecipitate the uranium. The uranium precipitate is separated from the aqueous solution in the third solids separator such as a conventional centrifuge or filter. The aqueous solution is recycled, and the uranium precipitate dried in a dryer and calcined in a calciner, both of which are conventional and preferably indirectly fired.

As an alternative to the above processing sequence, the solution remaining after separation of the iron and orthoester solids can be heated to a sufficiently high temperature to drive off ammonia and carbon dioxide and precipitate uranium quantitatively as uranyl carbonates. The precipitate is filtered off, dried and calcined.

In accordance with another embodiment of the invention, the uranium concentration in the alkaline stripping solution is maintained below saturation so that the uranium stripping into the stripping solution will not coprecipitate with the iron and orthoesters. In accordance with the embodiment, the alkaline stripping solution is an aqueous solution preferably of an alkali metal or ammonium carbonate. The stripping can be accomplished in a batch operation or in a continuous manner concurrently or countercurrently with countercurrent flow preferred. It is preferred to operate the stripping using a 1 to 3 stage, preferably 2 stage, countercurrent stripping unit. In general, the volume ratio of the alkaline stripping solution to the extractant solution during stripping should be between about 0.3 to 6:1 but is not restricted to this range.

The alkaline stripping solution, after being separated from the extractant, is fed to a solids separator such as a conventional centrifuge or filter. The precipitate, containing iron and orthoesters is separated from the alkaline stripping solution in the solids separator. The alkaline stripping solution containing the uranium is fed to a crystallizer for quantitative precipitation of uranium as ammonium uranyl tricarbonate (AUT) at about 10°C to 30°C. The uranium precipitate is separated from the aqueous solution in a conventional solids separator such as a centrifuge or filter. The aqueous solution is heated to the desired stripping temperature and recycled, and the uranium precipitate dried in a dryer and calcined in a calciner, both of which are conventional and preferably indirectly fired.

As an alternative to the above processing sequence, the solution remaining after separation of the iron and orthoester solids can be heated instead of cooled to drive off ammonia and carbon dioxide and precipitate uranium quantitatively as uranyl carbonates. The precipitate is filtered off, dried and calcined.

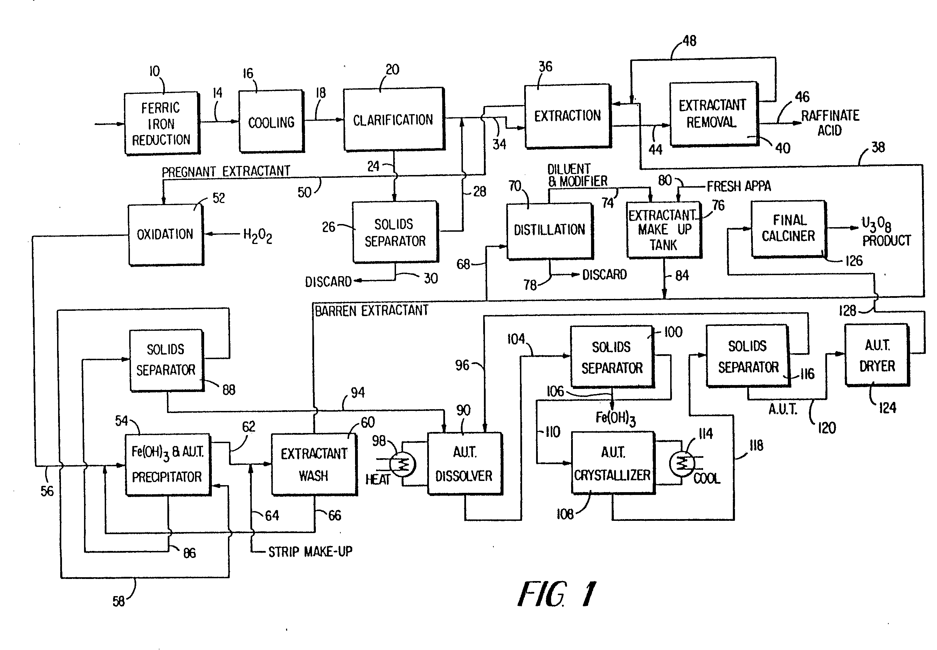

In order to facilitate an easier understanding of the uranium recovery stages of the present invention, a flow sheet illustrating the embodiment in which uranium is precipitated in the alkaline stripping solution is provided in Figure 1. Wet-process phosphoric acid is introduced into ferric iron reduction unit 10 and the ferric iron concentration reduced. The reduced wet-process acid is introduced via line 14 into cooling unit 16 in which the acid is cooled. After cooling, the acid is fed via line 18 to clarification unit 20. The solids separated in clarification unit 20 are fed via line 24 to solids separator 26. In the separator 26, residual acid is separated from the solids and recycled to extraction via line 28. The separated solids are fed to disposal via line 30.

The clarified acid is introduced via line 34 into a countercurrent uranium extraction unit 36, while an APPA extractant solution containing a modifier is introduced into the unit via recycle line 38. After extraction, the raffinate acid is fed to extractant removal unit 40 via line 44. The raffinate acid is returned to the acid producer via line 46 to be processed into "merchant acid". The extractant removed from the raffinate acid in extractant removal unit 40 is recycled to extraction via line 48.

The extractant, now rich in uranium, is fed via line 50 to oxidation unit 52 and then introduced into precipitation unit 54 via line 56, while an ammonium carbonate stripping solution saturated in AUT is introduced into the unit via recycle line 58. After being stripped of its uranium content, the extractant from precipitation unit 54 is fed to extractant wash unit 60 via line 62 and is then recycled to uranium extraction unit 36 via recycle line 38. Stripping solution makeup is fed to extractant wash unit 60 via line 64 and then fed to precipitation unit 54 line 66.

A portion of the recycled barren extractant is removed from recycle line 38 via bleed line 68 and fed to distillation 70. The overhead from the distillation unit 70, principally diluent and modifier, is fed via line 74 to extractant makeup tank 76, while the bottoms from the distillation unit 70, principally APPA extractant and hydrolysis products, are fed to discard via line 78. Fresh APPA is introduced into extractant makeup tank 76 and the resulting fresh extractant solution introduced into recycle line 38 via line 84.

The ammonium carbonate stripping solution from precipitator 54 is fed via line 86 to solids separator 88. The AUT and iron solids separated in solids separator 88 are introduced into AUT dissolver unit 90 via line 94, while the ammonium carbonate stripping solution from solids separator unit 88 is recycled to stripping via recycle line 58.

In AUT dissolver unit 90, the solids are combined with a solution of AUT fed to the dissolver unit 90 via recycle line 96. The mixture is heated in AUT dissolver unit 90 by heating unit 98 to dissolve the AUT while the ferric hydroxide and ester solids remains undissolved. The solution from AUT dissolver unit 90 is fed to solids separator 100 via line 104. Ferric hydroxide and ester solids are removed from solids separator unit 100 via line 106, and the resulting AUT solution fed to AUT crystallizer unit 108 via line 110. In AUT crystallizer unit 108, the solution is cooled by cooling unit 114 to crystallize AUT. The solution containing the crystallized AUT is fed to solids separator 116 via line 118. AUT solids are removed from solids separator 116 via line 120 and the solution of AUT recycled via line 96. The AUT solids are dried in AUT drier unit 124 after which the dried solids are fed to the final calciner unit 126 via line 128. In the final calciner unit 126, the AUT solids are decomposed thermally to yield a high-grade $U_3O_8$ product.

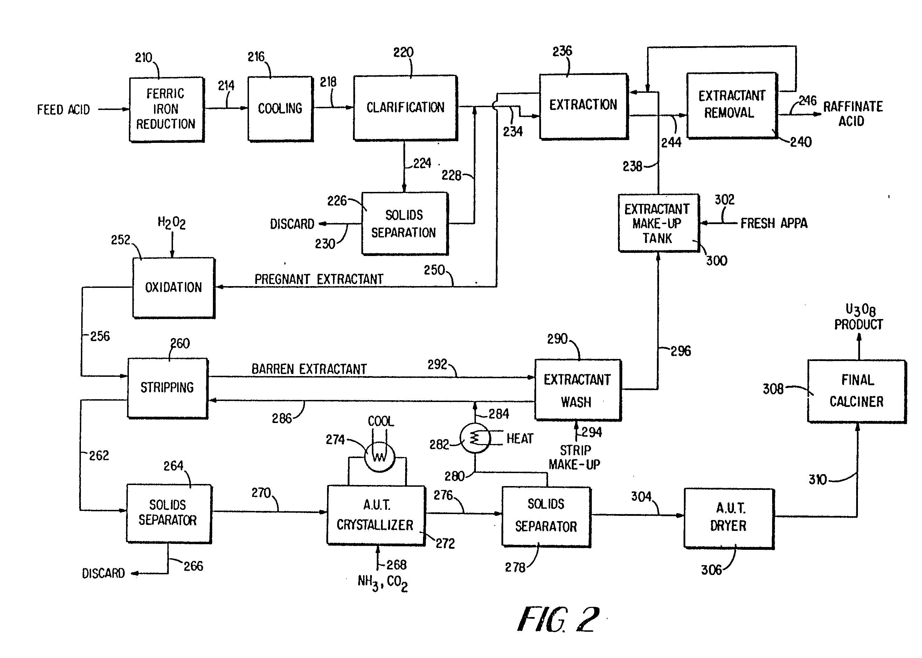

A further flow sheet illustrating the embodiment in which uranium is not precipitated in the alkaline stripping solution is provided in Figure 2. Wet-process phosphoric acid is introduced into ferric iron reduction unit 210 and the ferric iron concentration reduced. The reduced wet-process acid is introduced via line 214 into cooling unit 216 in which the acid is cooled. After cooling, the acid is fed via line 218 to clarification unit 220. The solids separated in clarification unit 220 are fed via line 224 to solids separator 226. In the separator 226, residual acid is separated from the solids and recycled to extraction via line 228. The separated solids are fed to disposal via line 230.

The clarified acid is introduced via line 234 into a countercurrent uranium extraction unit 236, while an APPA extractant solution containing a modifier is introduced into the unit via recycle line 238. After extraction, the raffinate acid is fed to extractant removal unit 240 via line 244. The raffinate acid is returned to the acid producer via line 246 to be processed into "merchant acid". The extractant removed from the raffinate acid in extractant removal unit 240 is recycled to extraction via line 248.

The extractant, now rich in uranium, is fed via line 250 to oxidation unit 252 and then into stripping unit 260 via line 256, while an ammonium carbonate stripping solution unsaturated in AUT is introduced into the unit via recycle line 286. After being stripped of its uranium content, the extractant from stripping unit 260 is fed to extractant wash unit 290 via line 292. Stripping solution makeup is fed to extractant wash unit 290 via line 294 and then fed to stripping unit 260 via line 286.

Fresh APPA extractant is introduced into extractant makeup tank 300 via line 302. Also introduced into extractant makeup tank 300 via line 296 is extractant from extractant wash unit 290. The resulting fresh extractant solution is recycled to uranium extraction unit 236 via recycle line 238.

The ammonium carbonate stripping solution from stripping unit 260 is fed via a line 262 to solids separator unit 264. The solids separated in solids separator 264 are fed to disposal via line 266. The resulting stripping solution is introduced into the AUT crystallizer unit 272 via line 270. In AUT crystallizer unit 272 the solution is cooled by cooling unit 274 to crystallize AUT. Ammonia and carbon dioxide makeup are introduced into the AUT crystallizer unit via line 268. The solution containing the crystallized AUT is fed to solids separator unit 278 via line 276. After removal of the solids from solids separator unit 278, the stripping solution is fed via line 280 to heating unit 282. The heated solution is then fed to recycle line 286 via line 284.

The AUT solids, removed from solids separator unit 278 via line 304, are dried in AUT drier unit 306 after which the dried solids are fed to the final calciner unit 308 via line 310. In the final calciner unit 308, the AUT solids are decomposed thermally to yield a high-grade $U_3O_8$ product.

To facilitate a better understanding of the advantages and operation of the present invention, the following examples are provided to specifically illustrate the invention.

Example 1

Wet-process phosphoric acid was fed to a three-stage countercurrent extraction unit at a flow rate of 88 ml/min. The wet-process acid contained 165 mg/l total uranium, 5.5 g/l ferric iron, and 29.5% $P_2O_5$ by weight and had a temperature of 50°C. The wet-process acid was contacted in the extraction unit at an aqueous to organic ratio of 4:1 for 20 minutes per cycle with an extractant solution containing 70/gl isodecyl pyrophosphoric acid in a kerosene diluent. The extractant solution also contained 52 ml/l n-octanol modifier. The flow rate of the extractant solution was 22 ml/min. The pregnant extractant was oxidized with a 50% by volume aqueous solution of hydrogen peroxide which was introduced into the pregnant extractant at a flow rate of 0.08 ml/min.

The pregnant extractant was introduced into a two stage countercurrent stripping unit and contacted with a two molar aqueous solution of ammonium carbonate at an aqueous to organic ratio of 2:1. The flow rate of the ammonium carbonate was 44 ml/min and the solution had a pH of 9.3 to 9.6. A bleed stream was removed from the barren extractant downstream of the stripping unit at a flow rate of 1.6 ml/min, and fresh extractant solution was added to the barren extractant downstream of the bleed stream at a flow rate of 1.6 ml/min. The fresh extractant solution contained 135 g/l isodecyl pyrophosphoric acid and 52 ml/l n-octanol modifier. The barren extractant was then returned to extraction.

The process was continued until the extractant had completed 36 cycles of combined extraction and stripping. A steady state analysis was as follows. The raffinate acid contained 25 mg/l total uranium, 5.36 g/l ferric iron and 29.5% $P_2O_5$ by weight and had a flow rate of 88 ml/min. The pregnant extractant contained 65 g/l isodecyl pyrophosphoric acid, 50 ml/l n-octanol modifier, and 5 g/l mono orthophosphate esters. The total uranium and ferric iron concentrations of the pregnant extractant were 572 mg/l and 1.5 g/l, respectively. The bleed stream contained 65 g/l isodecyl pyrophosphoric acid, 50 ml/l n-octanol modifier, 12 mg/l total uranium and 1.0 g/l ferric iron. The stripping solution after contact with the extractant contained 651 mg/l AUT, 280 mg/l total uranium, 480 mg/l ferric hydroxide (Fe(OH)$_3$) and 2.5 g/l mono orthophosphate esters.

## Example 2

Wet-process phosphoric acid was fed to a three-stage countercurrent extraction unit at a flow rate of 44 ml/min. The wet-process acid contained 165 mg/l total uranium, 6.5 g/l ferric iron, and 29.5% P$_2$O$_5$ by weight and had a temperature of 50°C. The wet-process acid was contacted in the extraction unit at an aqueous to organic ratio of 4:1 for 40 minutes per cycle with an extractant solution containing 70 g/l isodecyl pyrophosphoric acid in a kerosene diluent. The extractant solution also contained 52 ml/l isodecanol modifier. The flow rate of the extractant solution was 11 ml/min. The pregnant extractant was oxidized with a 50% by volume aqueous solution of hydrogen peroxide which was introduced into the barren extractant at a flow rate of 0.04 ml/min.

The barren extractant was introduced into a two-stage countercurrent stripping unit and contacted with a 2 molar aqueous solution of ammonium carbonate at an aqueous to organic ratio of 6:1. The flow rate of the ammonium carbonate solution was 66 ml/min, and the solution had a pH of 9.6 and was saturated with uranium. A bleed stream was removed from the barren extractant downstream of the stripping unit at a flow rate of 0.81 ml/min, and fresh extractant solution was added to the barren extractant downstream of the bleed stream at a flow rate of 0.81 ml/min. The fresh extractant solution contained 135 g/l isodecyl pyrophosphoric acid and 52 ml/l isodecanol modifier. The barren extractant was then returned to extraction.

The ammonium carbonate stripping solution exiting the stripping unit was filtered and the filtrate recycled to stripping. A makeup stream was added to the recycled filtrate prior to stripping. The makeup stream comprised 0.07 g/min ammonia, 0.09 g/min carbon dioxide, and 0.01 g/min water.

The process was continued for 15 cycles at which time the ammonium carbonate stripping solution was saturated with uranium. Analysis after 15 cycles was as follows. The raffinate acid contained 25 mg/l total uranium, 6.3 g/l ferric iron and 29.5% P$_2$O$_5$ by weight and had a flow rate of 44 ml/min. The pregnant extractant contained 65 g/l isodecyl pyrophosphoric acid 52 ml/l isodecanol modifier, and 5 g/l mono orthophosphate esters. The total uranium and ferric iron concentrations of the pregnant extractant were 574 mg/l and 2.0 g/l, respectively. The bleed stream contained 65 g/l isodecyl pyrophosphoric

acid, 52 ml/l isodecanol modifier, 14 mg/l total uranium and 1.2 g/l ferric iron. The stripping solution after contact with the extractant contained 216 mg/l AUT, 93 mg/l total uranium, 261 mg/l ferric hydroxide and also mono orthophosphate esters. The solids filtered out of the stripping solution comprised 14.3 mg/min AUT after saturation and 17.2 mg/min ferric hydroxide.

## Example 3

The process described in Example 2 was modified to incorporate a washing stage downstream of the stripping unit. The barren extractant was fed through the washing stage which was operated at an aqueous to organic ratio of 0.2:1 and then recycled to extraction. Also fed into the washing unit was a 2 molar aqueous solution of ammonium carbonate at a flow rate of 2 ml/min. Also, the stripping unit was operated at an aqueous to organic ratio of 4:1 by changing the ammonium carbonate stripping solution flow rate from 66 ml/min to 42 ml/min. Finally, a bleed stream was removed from the recycled filtrate at a rate of 2.2 ml/min and the makeup stream adjusted to 0.05 g/min ammonia and 0.07 g/min carbon dioxide. The process was continued for an additional 21 cycles or a total of 36 completed cycles.

The analysis during the 36th cycle was as follows. The analysis of the raffinate acid was the same as in Example 2. The pregnant extractant analysis also was the same as in Example 2 except that the total uranium concentration was 556 mg/l rather than 574 mg/l. The bleed stream analysis also was the same as in Example 2. The barren extractant contained 304 mg/l total uraniun upstream of the washing unit and 76 mg/l total uranium downstream of the washing unit. The ammonium carbonate stripping solution after contact with the extractant contained 279 mg/l AUT, 120 mg/l total uranium, 392 mg/l ferric hydroxide and also mono orthophosphate esters. The solids were removed from the filter at the rate of 12.34 mg/min AUT and 16.5 mg/min ferric hydroxide. The solids analyzed 15.29% by weight actual total uranium compared with a theoretical uranium content of 18.3% by weight.

## Example 4

Wet-process phosphoric acid was fed to a three-stage countercurrent extraction unit at a flow rate of 44 ml/min. The wet-process acid contained 188 mg/l total uranium, 3.95 g/l ferric iron, and 29.5% P$_2$O$_5$ by weight and had a temperature of 50°C. The wet-process acid was contacted in the extraction unit at an aqueous to organic ratio of 4:1 for 40 minutes per cycle with an extractant solution containing 70 g/l isodecyl pyrophosphoric acid in a kerosene base. The extractant solution also contained 58 ml/l isodecanol modifier. The flow rate of the extractant solution was 11 ml/min. The pregnant extractant was oxidized with a 50% by volume aqueous solution of hydrogen peroxide which was introduced into the pregnant extractant at a flow rate of 0.08 ml/min.

The pregnant extractant was introduced into two-stage countercurrent stripping unit and contacted with a 2 molar aqueous solution of ammonium carbonate at a temperature of 55°C and an organic to aqueous ratio of 2:1. The flow rate of the ammonium carbonate solution was 5.5 ml/min and the solution had a pH of 9.3 to 9.8. A bleed stream was removed from the barren extractant downstream of the stripping unit at a flow rate of 0.13 ml/min, and fresh extractant solution was added to the barren extractant downstream of the bleed stream at a flow rate of 0.13 ml/min. The fresh extractant solution contained 500 g/l isodecyl pyrophosphoric acid and 0.7 ml/l isodecanol modifier. The barren extractant was then returned to extraction.

The ammonium carbonate stripping solution exiting the stripping unit was filtered and a makeup stream added to the filtrate. The makeup stream comprised ammonia, carbon dioxide, and water. The filtrate was cooled to 20°C, and the AUT crystals formed were filtered. The filtrate was heated to 55° and recycled to stripping. A makeup stream of ammonia, carbon dioxide and water was added to the recycled filtrate prior to stripping to adjust the pH to 9.3 to 9.8.

The process was continued until the extractant had completed 11 cycles of combined extraction and stripping. A steady state analysis was as follows. The raffinate acid contained 1 mg/l total uranium, 3.8 g/l ferric iron and 29.5% $P_2O_5$ by weight and had a flow rate of 44 ml/min. The total uranium and ferric iron concentrations of the pregnant extractant were 919 mg/l and 1.8 g/l, respectively. The bleed stream contained 76 mg/l total uranium and 1.2 g/l ferric iron. The stripping solution after contact with the extractant contained 256 mg/l total uranium, and 300 g/l ferric iron and 20 g/l orthoesters. The solids filtered out of the stripping solution before cooling comprised 100 mg/min iron and orthoesters, and the solids filtered out after cooling comprised 22 mg/min AUT.

Example 5

Wet-process phosphoric acid was fed to a three-stage countercurrent extraction unit at a flow rate of 44 ml/min. The wet-process acid contained 164 mg/l total uranium, 5.2 g/l ferric iron, and 46.1% $P_2O_5$ by weight and had a temperature of 50°C. The wet-process acid was contacted in the extraction unit at an aqueous to organic ratio of 4:1 for 40 minutes per cycle with an extractant solution containing about 85 g/l isodecyl pyrophosphoric acid in a kerosene base. The extractant solution also contained 58 ml/l isodecanol modifier. The flow rate of the extractant solution was 11 ml/min. The pregnant extractant was oxidized with a 50% by volume aqueous solution of hydrogen peroxide which was introduced into the pregnant extractant at a flow rate of 0.04 ml/min.

The pregnant extractant was introduced into single-state stripping unit and contacted with a 2 molar aqueous solution of ammonium carbonate at an aqueous to organic ratio of 5:1. The flow rate of the ammonium carbonate solution was 55 ml/min and the solution had a pH of 9.5 and contained 2614 mg/l uranium. A bleed stream was removed from the barren extractant downstream of the stripping unit at a flow rate of 0.81 ml/min, and fresh extractant solution was added to the barren extractant downstream of the bleed stream at a flow rate of 0.81 ml/min. The fresh extractant solution contained 135 g/l isodecyl pyrophosphoric acid and 52 ml/l isodecanol modifier. The barren extractant was then returned to extraction.

The ammonium carbonate stripping solution exiting the stripping unit was filtered and the filtrate was adjusted back to 2M ammonium carbonate by the addition of an aqueous ammonium carbinate solution and cooled to 20°C. The AUT crystals formed were filtered. The filtrate was recycled to stripping.

The process was continued for 11 cycles. A steady state analysis after the fourth cycle was as follows. The raffinate acid contained 38 mg/l total uranium 5 g/l ferric iron and 46.1% $P_2O_5$ by weight and had a flow rate of 44 ml/min. The total uranium and ferric iron concentrations of the pregnant extractant were 508 mg/l and 1.3 g/l, respectively. The bleed stream contained 164 mg/l total uranium and 0.9 g/l ferric iron. The stripping solution after contact with the extractant contained about 2614 mg/l total uranium, and 0.2 g/l ferric iron. The solids filtered out of the stripping solution before cooling contained about 5% by weight iron and about 29% by weight $P_2O_5$. The AUT solids formed analyzed about 39% by weight actual total uranium and 1.8% by weight $P_2O_5$ and 0% total iron. The analyzed 39% actual compared with a theoretical uranium content of 43%.

As will be readily understood by those of ordinary skill in the art, minor modifications may be made in the process described above without in any way departing from the spirit and scope of the invention. Accordingly, it is understood that the invention will not be limited to the exact details disclosed hereinbefore, but will be defined in accordance with the appended claims.

**Claims**

1. A process for stripping uranium from a pregnant organic extractant comprising an alkyl pyrophosphoric acid dissolved in a substantially water-immiscible organic diluent, the said organic extractant containing tetravalent uranium and an alcohol or phenol modifier in a quantity sufficient to retain the alkyl pyrophosphoric acid in solution in the said diluent during stripping, characterized by adding an oxidizing agent to the organic extractant to oxidize the tetravalent uranium, and stripping the organic extractant with a stripping solution comprising an aqueous solution of an alkali metal or ammonium carbonate or hydroxide to strip uranium from the organic extractant into the stripping solution, and separating the organic extractant containing the alkyl pyrophosphoric acid dissolved in the diluent from the stripping solution containing the said stripped uranium.

2. A process as claimed in Claim 1, characterized in that the alkyl pyrophosphoric acid is a reaction product of phosphoric oxide and an alcohol containing 4 to 20 carbon atoms.

3. A process as claimed in Claim 2, characterized in that the said alcohol contains 6 to 12 carbon atoms.

4. A process as claimed in any of Claims 1 to 3, characterized in that the organic extractant contains about 10 to 150 g/l of the alkyl pyrophosphoric acid.

5. A process as claimed in any of Claims 1 to 4, characterized in that the said modifier is an essentially water-immiscible alcohol or phenol which is substantially soluble in the said diluent and contains an —OH group which will bond to the alkyl pyrophosphoric acid by hydrogen bonding.

6. A process as claimed in Claim 5, characterized in that the said alcohol is an aliphatic or substituted aliphatic or alicyclic alcohol containing 4 to 20 carbon atoms.

7. A process as claimed in Claim 6, characterized in that the said alcohol contains 6 to 12 carbon atoms.

8. A process as claimed in any of Claims 1 to 7, characterized in that the organic extractant contains a maximum of about 1 mole of the said modifier per atom of phosphorus contained in the organic extractant.

9. A process as claimed in any of Claims 1 to 8, characterized in that the said oxidizing agent is hydrogen peroxide.

10. A process as claimed in any of Claims 1 to 9, characterized in that the said stripping solution is an ammonium-ion containing solution.

11. A process as claimed in Claim 10, characterized in that the said ammonium-ion containing solution is an aqueous ammonium carbonate solution.

12. A process as claimed in any of Claims 1 to 11, characterized in that the said stripping solution has a pH of about 8 to 12.

13. A process as claimed in any of Claims 1 to 12, characterized in that the said pH is about 9 to 10.

14. A process as claimed in any of Claims 1 to 13, characterized in that the weight ratio of the said modifier to the alkyl pyrophosphoric acid is about 1/2 to 3/4.

15. A process as claimed in any Claims 1 to 14, characterized in that the organic extractant has a temperature of about 55°C or below.

16. A process as claimed in any of Claims 1 to 15, characterized in that the organic extractant is contacted with wet-process phosphoric acid containing tetravalent uranium to extract the tetravalent uranium from the wet-process phosphoric acid into the organic extractant.

17. A process as claimed in Claim 16, characterized in that barren organic extractant is recycled for contacting with fresh wet-process phosphoric acid.

18. A process as claimed in Claim 17, characterized in that the said barren organic extractant is washed to remove any stripping solution entrained in the said extractant.

19. A process as claimed in Claim 17 or 18, characterized in that fresh alkyl pyrophosphoric acid and diluent are added to the said recycled barren organic extractant.

20. A process as claimed in Claim 19, characterized in that modifier is also added to the said recycled barren organic extractant.

21. A process as claimed in any of Claims 17 to 20, characterized in that the said recycled barren organic extractant is reacidulated with a mineral acid.

22. A process as claimed in any of Claims 1 to 21, characterized in that the said stripped uranium is precipitated in the said stripping solution, the said precipitate is separated from the stripping solution, and the stripping solution is recycled for contact with pregnant organic extractant.

23. A process as claimed in Claim 22, characterized in that ferric iron and alkyl pyrophosphoric acid decomposition products also are precipitated in the stripping solution.

24. A process as claimed in Claim 23, characterized in that the precipitated uranium is dissolved in an aqueous solution, the said ferric iron solids are separated from the said aqueous solution, and the said dissolved uranium is reprecipitated.

25. A process as claimed in Claim 24, characterized in that the precipitated uranium is dissolved by heating and reprecipitated by cooling.

26. A process as claimed in Claim 24, characterized in that the said dissolved uraniun is reprecipitated by heating.

27. A process as claimed in Claim 23, characterized in that the uranium concentration in the stripping solution is maintained below saturation during stripping and the said ferric iron and decomposition product precipitates are separated from the stripping solution before uranium is precipitated.

28. A process as claimed in Claim 27, characterized in that the uranium is precipitated by cooling.

29. A process as claimed in Claim 27, characterized in that the uranium is precipitated by heating.

30. A process as claimed in any of Claims 22 to 29, characterized in that the precipitated uranium is dried and calcined to form a final $U_3O_8$ product.

31. A process as claimed in any of Claims 1 to 30, characterized in that the organic extractant is contacted with wet-process acid having a $P_2O_5$ concentration of 40 to 55% by weight to extract tetravalent uranium into the organic extractant prior to the said oxidation step.

32. A process as claimed in Claim 31, characterized in that the said wet-process acid has a

P$_2$O$_5$ concentration of 40 to 45% by weight.

**Patentansprüche:**

1. Verfahren zur Rückextraktion von Uran aus einem beladenen organischen Extraktionsmittel, das von einer in einem im wesentlichen mit Wasser unmischbaren organischen Verdünnungsmittel gelösten Alkylpyrophosphorsäure gebildet wird, wobei das genannte organische Extraktionsmittel vierwertiges Uran sowie einen Alkohol- oder Phenol-Modifizierer in einer solchen Menge enthält, die ausreicht, die Aklylpyrophosphorsäure in dem genannten Verdünnungsmittel während der Rückextraktion in Lösung zu halten, gekennzeichnet durch Zusetzen eines Oxidationsmittels zu dem organischen Extraktionsmittel zur Oxidation des vierwertigen Urans und Rückextraktion des organischen Extraktionmittels mit einer Rückextraktions-Lösung, die von einer wäßrigen Lösung eines Alkalimetall- oder Ammonium-carbonats oder -hydroxyds gebildet wird, um Uran aus dem organischen Extraktionsmittel in die Rückextraktionslösung rückzuextrahieren, und Abtrennen des organischen Extraktionsmittels, das die in dem Verdünnungsmittel gelöste Alkylpyrophosphorsäure enthält, von der Rückextraktionslösung, die das genannte rückextrahierte Uran enthält.

2. Verfahren nach Anspruch 1, dadurch gekennzeichnet, daß die Alkypyrophosphorsäure ein Reaktionsprodukt von Phosphorpentoxid und einem Alkohol, der von 4 bis 20 Kohlenstoffatome enthält, ist.

3. Verfahren nach Anspruch 2, dadurch gekennzeichnet, daß der genannte Alkohol von 6 bis 12 Kohlenstoffatome enthält.

4. Verfahren nach irgendeinem der Ansprüche 1 bis 3, dadurch gekennzeichnet, daß das organische Extraktionsmittel etwa 10 bis 150 g/l der Alkylpyrophosphorsäure enthält.

5. Verfahren nach irgendeinem der Ansprüche 1 bis 4, dadurch gekennzeichnet, daß der genannte Modifizierer ein im wesentlichen mit Wasser unmischbarer Alkohol oder ein solches Phenol ist, die in dem genannten Verdünnungsmittel eine beträchtliche Löslichkeit aufweisen und eine —OH—Gruppe enthalten, die durch Wasserstoffbrückenbindung an die Alkylpyrophosphorsäure gebunden wird.

6. Verfahren nach Anspruch 5, dadurch gekennzeichnet, daß der genannte Alkohol ein aliphatischer oder ein substituierter aliphatischer oder alizyklischer Alkohol ist, der von 4 bis 20 Kohlenstoffatome enthält.

7. Verfahren nach Anspruch 6, dadurch gekennzeichnet, daß der genannte Alkohol von 6 bis 12 Kohlenstoffatome enthält.

8. Verfahren nach irgendeinem der Ansprüche 1 bis 7, dadurch gekennzeichnet, daß das organische Extraktionsmittel maximal etwa 1 Mol des genannten Modifizierers pro Phosphoratom, das in dem genannten organischen Extraktionsmittel enthalten ist, enthält.

9. Verfahren nach irgendeinem der Ansprüche 1 bis 8, dadurch gekennzeichnet, daß das genannte Oxidationsmittel Wasserstoffperoxid ist.

10. Verfahren nach irgendeinem der Ansprüche 1 bis 9, dadurch gekennzeichnet, daß die Rückextraktionslösung eine Ammoniumionen enthaltende Lösung ist.

11. Verfahren nach Anspruch 10, dadurch gekennzeichnet, daß die genannte Ammoniumionen enthaltende Lösung eine, wäßrige Ammoniumcarbonatlösung ist.

12. Verfahren nach irgendeinem der Ansprüche 1 bis 11, dadurch gekennzeichnet, daß die genannte Rückextraktionslösung einen pH von etwa 8 bis 12 aufweist.

13. Verfahren nach irgendeinem der Ansprüche 1 bis 12, dadurch gekennzeichnet, daß der genannte pH etwa 9 bis 10 beträgt.

14. Verfahren nach irgendeinem der Ansprüche 1 bis 13, dadurch gekennzeichnet, daß das Gewichtsverhältnis des genannten Modifizierers zu der Alkylpyrophosphorsäure etwa 1/2 bis 3/4 beträgt.

15. Verfahren nach irgendeinem der Ansprüche 1 bis 14, dadurch gekennzeichnet, daß das organische Extraktionsmittel eine Temperatur von etwa 55°C oder weniger aufweist.

16. Verfahren nach irgendeinem der Ansprüche 1 bis 15, dadurch gekennzeichnet, daß das organische Extraktionsmittel mit einer Naßverfahrens-Phosphorsäure, die vierwertiges Uran enthält, in Kontakt gebracht wird, um das vierwertige Uran aus der Naßverfahrens-Phosphorsäure in das organische Extraktionsmittel zu extrahieren.

17. Verfahren nach Anspruch 16, dadurch gekennzeichnet, daß das ausgelaugte organische Extraktionsmittel zur neuerlichen Behandlung von frischer Naßverfahrens-Phosphorsäure zurückgeführt wird.

18. Verfahren nach Anspruch 17, dadurch gekennzeichnet, daß das ausgelaugte organische Extraktionsmittel gewaschen wird, um alle Reste der Rückextraktions-Lösung zu entfernen, die in dem genannten Extraktionsmittel enthalten sind.

19. Verfahren nach Anspruch 17 oder 18, dadurch gekennzeichnet, daß frische Alkylpyrophosphorsäure und Verdünnungsmittel zu dem genannten zurückgeführten ausgelaugten organische Extraktionsmittel zugesetzt werden.

20. Verfahren nach Anspruch 19, dadurch gekennzeichnet, daß der Modifizierer ebenfalls zu dem genannten zurückgeführten ausgelaugten organischen Extraktionsmittel zugesetzt wird.

21. Verfahren nach irgendeinem der Ansprüche 17 bis 20, dadurch gekennzeichnet, daß das genannte zurückgeführte ausgelaugte organische Extraktionsmittel mit einer Mineralsäure wieder angesäuert wird.

22. Verfahren nach irgendeinem der Ansprüche 1 bis 21, dadurch gekennzeichnet, daß das rückextrahierte Uran in der genannten Rückextraktionslösung ausfällt, daß der genannte Niederschlag von der Rückextraktionslösung abgetrennt wird und die Rückextraktionslösung zum neuerlichen Kontakt mit dem beladenen organischen Extraktionsmittel zurückgefürt wird.

23. Verfahren nach Anspruch 22, dadurch gekennzeichnet, daß Eisen(III) und Alkylpyrophosphorsäure-Zersetzungsprodukte ebenfalls in der Rückextraktionslösung ausfallen.

24. Verfahren nach Anspruch 23, dadurch gekennzeichnet, daß das ausgefallene Uran in einer wäßrigen Lösung aufgelöst wird, daß die genannten Eisen(III)—Feststoffe von dieser genannten wäßrigen Losung abgetrennt werden und daß das genannte aufgelöste Uran wieder ausgefällt wird.

25. Verfahren nach Anspruch 24, dadurch gekennzeichnet, daß das ausgefallene Uran durch Erwärmen aufgelöst und durch Abkühlen wieder ausgefällt wird.

26. Verfahren nach Anspruch 24, dadurch gekennzeichnet, daß das aufgelöste Uran durch Erhitzen wieder ausgefällt wird.

27. Verfahren nach Anspruch 23, dadurch gekennzeichnet, daß die Urankonzentration in der Rückextraktionslösung während der Rückextraktion unterhalb der Sättigung gehalten wird und daß die genannten Eisen(III) — und Zersetzungsprodukts-Niederschläge von der Rückextraktionslösung abgetrennt werden, bevor das Uran ausgefällt wird.

28. Verfahren nach Anspruch 27, dadurch gekennzeichnet, daß das Uran durch Abkühlen ausgefällt wird.

29. Verfahren nach Anspruch 27, dadurch gekennzeichnet, daß das Uran durch Erhitzen ausgefällt wird.

30. Verfahren nach irgendeinem der Ansprüche 22 bis 29, dadurch gekennzeichnet, daß das ausgefällte Uran getrocknet und calciniert wird, um ein $U_3O_8$-Endprodukt zu bilden.

31. Verfahren nach irgendeinem der Ansprüche 1 bis 30, dadurch gekennzeichnet, daß das organische Extraktionsmittel mit Naßverfahrens-Säure mit einer $P_2O_5$-Konzentration von 40 bis 55 Gew.-% in Kontakt gebracht wird, um vierwertiges Uran vor der genannten Oxidationsstufe in das organische Extraktionsmittel zu extrahieren.

32. Verfahren nach Anspruch 31, dadurch gekennzeichnet, daß die genannte Naßverfahrens-Säure eine $P_2O_5$-Konzentration von 40 bis 45 Gew.-% aufweist.

## Revendications

1. Procédé pour réextraire l'uranium à partir d'un extracteur organique chargé comprenant un acide alcoylpyrophosphorique dissous dans un diluant organique pratiquement non miscible à l'eau, l'extracteur organique contenant de l'uranium tétravalent et un alcool ou un phénol comme agent de modification en une quantité suffisante pour retenir en solution dans le diluant l'acide alcoylpyrophosphorique pendant la réextraction, caractérisé en ce que l'on ajoute un agent oxydant à l'extracteur organique pour oxyder l'uranium tétravalent, et on réextrait l'extracteur organique avec une solution de réextraction comprenant une solution aqueuse d'un carbonate ou d'un hydroxyde de métal alcalin ou d'ammonium, pour transférer par réextraction l'uranium de l'extracteur organique dans la solution de réextraction, et l'on sépare l'extracteur organique contenant l'acide alcoylpyrophosphorique dissous dans le diluant de la solution de réextraction contenant l'uranium réextrait.

2. Procédé suivant la revendication 1, caractérisé en ce que l'acide alcoylpyrophosphorique est un produit de réaction d'un oxyde phosphorique avec un alcool contenant 4 à 20 atomes de carbone.

3. Procédé selon la revendication 2, caractérisé en ce que l'alcool contient 6 à 12 atomes de carbone.

4. Procédé selon l'une quelconque des revendications 1 à 3, caractérisé en ce que l'extracteur organique contient environ 10 à 150 g/l de l'acide alcoylpyrophosphorique.

5. Procédé selon l'une quelconque des revendications 1 à 4, caractérisé en ce que l'agent de modification est un alcool ou un phénol essentiellement miscible à l'eau, qui est notablement soluble dans le diluant et contient un groupe —OH qui se liera à l'acide alcoylpyrophosphorique par liaison hydrogène.

6. Procédé selon la revendication 5, caractérisé en ce que l'alcool est un alcool aliphatique ou aliphatique substitué ou alicyclique contenant 4 à 20 atomes de carbone.

7. Procédé selon la revendication 6, caractérisé en ce que l'alcool contient 6 à 12 atomes de carbone.

8. Procédé selon l'une quelconque des revendications 1 à 7, caractérisé en ce que l'extracteur organique contient un maximum d'environ I mole de l'agent de modification par atome de phosphore contenu dans l'extracteur organique.

9. Procédé selon l'une quelconque des revendications 1 à 8, caractérisé en ce que l'agent oxydant est du peroxyde d'hydrogène.

10. Procédé selon l'une quelconque des revendications 1 à 9, caractérisé en ce que la solution de réextraction est une solution contenant un ion ammonium.

11. Procédé selon la revendication 10, caractérisé en ce que la solution contenant l'ion ammonium est une solution aqueuse de carbonate d'ammonium.

12. Procédé selon l'une quelconque des revendications 1 à 11, caractérisé en ce que la solution de réextraction a un pH d'environ 8 à 12.

13. Procédé selon l'une quelconque des revendications 1 à 12, caractérisé en ce que le pH est d'environ 9 à 10.

14. Procédé selon l'une quelconque des revendications 1 à 13, caractérisé en ce que le rapport pondéral de l'agent de modification à l'acide alcoylpyrophosphorique est d'environ 1/2 à 3/4.

15. Procédé selon l'une quelconque des revendications 1 à 14, caractérisé en ce que l'extracteur organique a une temperature d'environ 55°C ou moins.

16. Procédé selon l'une quelconque des revendications 1 à 15, caractérisé en ce que l'extracteur organique est mis en contact avec de l'acide phosphorique préparé selon le procédé par voie humide contenant de l'uranium tétravalent, pour extraire l'uranium tétravalent de cet acide phosphorique du procédé par voie humide dans l'extracteur organique.

17. Procédé selon la revendication 16, caractérisé en ce que l'extracteur organique non chargé est recyclé pour être mis en contact avec de l'acide phosphorique frais du procédé par voie humide.

18. Procédé selon la revendication 17, caractérisé en ce que l'extracteur organique non chargé est lavé pour éliminer toute solution de réextraction entraînée dans l'extracteur.

19. Procédé selon la revendication 17 ou 18, caractérisé en ce que du diluant et de l'acide alcoylpyrophosphorique frais sont ajoutés à l'extracteur organique non chargé recyclé.

20. Procédé suivant la revendication 19, caractérisé en ce que de l'agent de modification est aussi ajouté à l'extracteur organique non chargé recyclé.

21. Procédé selon l'une quelconque des revendications 17 à 20, caractérisé en ce que l'extracteur organique non chargé recyclé est réacidulé avec un acide minéral.

22. Procédé selon l'une quelconque des revendications 1 à 21, caractérisé en ce que l'on fait précipiter l'uranium réextrait dans la solution de réextraction, que l'on sépare le précipité de la solution de réextraction et que l'on recycle la solution de réextraction pour la mettre en contact avec l'extracteur organique chargé.

23. Procédé selon la revendication 22, caractérisé en ce que l'on fait précipiter également dans la solution de réextraction du fer ferrique et des produits de décomposition de l'acide alcoylpyrophosphorique.

24. Procédé selon la revendication 23, caractérisé en ce que l'on dissout l'uranium précipité dans une solution aqueuse, on sépare les solides contenant le fer ferrique de la solution aqueuse et on fait reprécipiter l'uranium dissous.

25. Procédé selon la revendication 24, caractérisé en ce que l'uranium précipité est dissous par chauffage, puis reprécipité par refroidissement.

26. Procédé selon la revendication 24, caractérisé en ce que l'uranium dissous est reprécipité par chauffage.

27. Procédé selon la revendication 23, caractérisé en ce que l'on maintient la concentration d'uranium dans la solution de réextraction à une valeur inférieure à la valeur de saturation pendant la réextraction et que l'on sépare les précipités de fer ferrique et de produits de décomposition de la solution de réextraction avant de faire précipiter l'uranium.

28. Procédé selon la revendication 27, caractérisé en ce que l'uranium est précipité par refroidissement.

29. Procédé selon la revendication 27, caractérisé en ce que l'uranium est précipité par chauffage.

30. Procédé selon l'une quelconque des revendications 22 à 29, caractérisé en ce que l'uranium précipité est séché et calciné pour former un $U_3O_8$ final.

31. Procédé selon l'une quelconque des revendications 1 à 30, caractérisé en ce que l'extracteur organique est mis en contact avec un acide du procédé par voie humide ayant une concentration en $P_2O_5$ de 40 à 55% en poids pour extraire l'uranium tétravalent dans l'extracteur organique avant l'étape d'oxydation

32. Procédé selon la revendication 31, caractérisé en ce que l'acide du procédé par voie humide a une concentration en $P_2O_5$ de 40 à 45% en poids.

FIG. 1

FIG. 2